# EUROPÄISCHE PATENTSCHRIFT

(11) **EP 2 012 208 B1**
(45) Veröffentlichungstag und Bekanntmachung des Hinweises auf die Patenterteilung: **28.09.2011**
(21) Anmeldenummer: 08158890.7
(22) Anmeldetag: 24.06.2008
(51) Int. Cl.: G05B 19/427, B25J 9/16

(54) **Programmierhandgerät**
Programmable hand tool
Outil manuel de programmation

(30) Priorität: 26.06.2007 DE 102007029335
(43) Veröffentlichungstag der Anmeldung: 07.01.2009
(73) Patentinhaber: KUKA Laboratories GmbH, 86165 Augsburg (DE)
(72) Erfinder: Hietmann, Gerhard, 86405, Herbertshofen (DE)
(74) Vertreter: Patentanwälte Funk & Böss GbR

(56) Entgegenhaltungen:
- EP-A- 1 795 315
- WO-A-96/01977
- WO-A-96/09918
- WO-A-2006/007833
- DE-A1- 19 913 756
- GB-A- 2 228 065

## Beschreibung

Die Erfindung betrifft ein Programmierhandgerät zum Programmieren eines Industrieroboters.

Industrieroboter sind Handhabungsmaschinen, die zur selbsttätigen Handhabung von Objekten mit zweckdienlichen Werkzeugen ausgerüstet und in mehreren Bewegungsachsen insbesondere hinsichtlich Orientierung, Position und Arbeitsablauf programmierbar sind. Unter Verfahren zum Programmieren des Industrieroboters (Programmierverfahren) versteht man das planmäßige Vorgehen zur Erzeugung von Anwenderprogrammen.

Programmierverfahren lassen sich in direkte, indirekte und hybride Verfahren unterscheiden. Direkte Verfahren werden auch als On-line-Verfahren und indirekte Verfahren werden auch als Off-line-Verfahren bezeichnet. Hybride Verfahren stellen eine Kombination aus direkten und indirekten Verfahren dar.

Zu den direkten Verfahren zählt die sogenannte Teach-In-Programmierung und das Play-Back-Verfahren.

Bei der Teach-In-Programmierung, kurz: Teachen, wird der Industrieroboter mittels einer geeigneten Vorrichtung in die gewünschte Position gefahren und die Position in einer Steuerung des Industrieroboters gespeichert. Dieser Schritt wird solange wiederholt, bis die gesamte gewollte Bewegung des Industrieroboters durch angefahrene Raumpunkte beschrieben ist. So entsteht eine Abfolge von Raumpunkten, die der Industrieroboter nacheinander abfährt.

Geeignete Vorrichtungen für die Teach-In Programmierung sind z.B. Programmierhandgeräte mit Verfahrtasten, mit einer sogenannten Spacemouse, mit einem Joystick oder mit einer Kombination aus Tasten und radförmigem Regler.

Die JP 61-151711 A offenbart ein Programmierhandgerät mit einem Neigungssensor, durch den ein Rollen und Neigen des Programmierhandgerätes in eine Bewegung jeweils einer Achse des Industrieroboters umgesetzt wird.

Die WO 96/09918 offenbart eine Steuervorrichtung, die eine manuell bewegbares Steuereinrichtung mit einem Transducer umfasst. Der Transducer ist eingerichtet, Signale von mehreren Signalquellen zu erhalten. Die Steuereinrichtung umfasst Erkennungsmittel, die die Richtung vom Tranducer zu den Signalquellen erkennt.

Die Aufgabe der vorliegenden Erfindung ist es, ein Programmierhandgerät zum Programmieren eines Industrieroboters anzugeben, das einerseits relativ einfach ausgeführt ist und andererseits für eine Bedienperson eine relativ einfache Handhabung erlaubt.

Die Aufgabe der Erfindung wird gelöst durch ein Programmierhandgerät zum Programmieren eines Industrieroboters, aufweisend einen Griff und eine Kamera mit einer bildgebenden Optik, wobei die Kamera derart zumindest indirekt mit dem Griff gelenkig verbunden ist, dass sich die bildgebende Optik der Kamera unabhängig von der Stellung des Griffs im Raum in Richtung der Schwerkraft selbsttätig ausrichtet, und zumindest indirekt derart mit dem Griff gelenkig verbunden ist, dass bei einer Drehung des Griffs um eine in Richtung der Schwerkraft verlaufenden ersten Achse sich die Optik der Kamera entsprechend der Drehung des Griffs um die erste Achse dreht.

Das erfindungsgemäße Programmierhandgerät ist für die Programmierung eines Industrieroboters insbesondere im Rahmen einer Teach-In-Programmierung des Industrieroboters vorgesehen. Bei der Teach-In-Programmierung, kurz: Teachen, wird der Industrieroboter bzw. ein vorbestimmter Punkt des Industrieroboters mittels eines Programmierhandgerätes zumindest teilweise in die gewünschte Position und/oder Orientierung im Raum gefahren und diese in einer Steuerung des Industrieroboters gespeichert.

Das erfindungsgemäße Programmiergerät umfasst den Griff, den eine Bedienperson mit einer Hand ergreifen und somit das Programmierhandgerät führen kann. Des Weiteren umfasst das erfindungsgemäße Programmierhandgerät die Kamera, deren bildgebende Optik sich selbsttätig unabhängig von der Stellung des Griffs im Raum in Richtung der Schwerkraft ausrichtet. Die Kamera kann dabei derart relativ zum Griff angeordnet sein, dass deren Optik stets in Richtung des Bodens oder in Richtung einer Decke ausgerichtet ist, also Bilder vom Boden oder von der Decke aufnehmen kann. Damit sich die Kamera stets zuverlässig in Richtung Schwerkraft ausrichtet, kann deren Schwerpunkt im Vergleich zum Griff relativ tief ausgelegt sein. Die Kamera kann insbesondere eine Digitalkamera, wie beispielsweise eine Web-CAM sein.

Die Kamera des erfindungsgemäßen Programmierhandgerätes ist zumindest indirekt derart mit dem Griff gelenkig verbunden, dass bei einer Drehung des Griffs um eine in Richtung der Schwerkraft verlaufenden ersten Achse sich die Optik der Kamera entsprechend der Drehung des Griffs um die erste Achse dreht. Die erste Achse verläuft in Richtung der Schwerkraft, in deren Richtung erfindungsgemäß sich auch die Optik der Kamera unabhängig von der Stellung des Griffs im Raum automatisch ausrichtet. Bei einer Drehung des Griffs um die erste Achse dreht sich die Kamera bzw. deren Optik ebenfalls um die erste Achse. Das erfindungsgemäße Programmierhandgerät kann dann insbesondere derart ausgeführt sein, dass es aufgrund von mit der Kamera aufgenommenen Bildern einer Ebene rechtwinklig zur ersten Achse einen ersten Winkel, der einer Drehung des Griffs um die erste Achse zugeordnet ist, berechnet. Der Begriff "Bilder" soll in diesem Zusammenhang auch digitale Bilder bzw. den Bildern zugeordnete Bilddatensätze umfassen.

Das erfindungsgemäße Programmierhandgerät ist insbesondere für die Teach-In-Programmierung des Industrieroboters vorgesehen, der insbesondere einen vorbestimmten Punkt aufweisen kann, dessen Orientierung zumindest teilweise im Raum durch eine Bewegung des Griffs des Programmierhandgerätes während des Programmierens des Industrieroboters einstellbar ist. Die Orientierung dieses vorbestimmten Punkts, der beispielsweise der sogenannte Tool Center Point (TCP) oder der Flansch des Industrieroboters sein kann, hat generell drei Freiheitsgrade im Raum. Eine Teilorientierung dieses Punktes kann mittels einer Drehung dieses Punktes bezüglich der in Richtung der Schwerkraft verlaufenden Achse, die üblicherweise als z-Achse bezeichnet wird, beschrieben werden. Die z-Achse entspricht der ersten Achse des Programmierhandgerätes, sodass dieses mit dem Industrieroboter derart zusammenwirken kann, dass sich der vorgegebene Punkt des Industrieroboters mit der Drehung des Griffs des Programmierhandgerätes entsprechend der Drehung des Griffs um die z-Achse dreht. Insbesondere kann das erfindungsgemäße Programmierhandgerät derart ausgeführt sein, dass sich der vorgegebene Punkt um die z-Achse um denselben ersten Winkel dreht, mit dem der Griff des Programmierhandgerätes um die erste Achse gedreht wird. Der erste Winkel kann z.B. direkt mit dem Programmierhandgerät z.B. mittels einer Rechenvorrichtung des Programmierhandgerätes berechnet werden. Es ist aber auch möglich, dass z.B. ein Steuerrechner des Industrieroboters aufgrund der von der Kamera erzeugten Bilder den ersten Winkel berechnet und den Industrieroboter entsprechend ansteuert, dass dessen vorgegebener Punkt sich um die Achse in Richtung der Schwerkraft entsprechend dem ersten Winkel dreht.

Für eine relativ zuverlässige Berechnung des ersten Winkels kann eine zur ersten Achse rechtwinklig ausgerichteten Ebene mit Markern versehen sein, mit deren Hilfe die Vorrichtung den erste Winkel berechnet. Ist die Optik der Kamera in Richtung des Bodens ausgerichtet, so können diese Marker in relativ einfacher Weise auf diesem Boden aufgebracht sein.

Die Marker bzw. Markierungen können z.B. an horizontalen Ebenen innerhalb eines Arbeitsbereichs des Industrieroboters angebracht sein, wobei die Markierungen (Marker) z.B. in eine vorbestimmte Achse eines Koordinatensystems zeigen, das dem Fußpunkt des Industrieroboters zugeordnet ist. Dadurch, dass die Kamera aufgrund ihrer erfindungsgemäßen Ausrichtung relativ zum Griff stets auf diese Ebene ausgerichtet ist, sind Vorraussetzungen für eine relativ einfache Auswertung der mit der Kamera erzeugten Bilder gegeben, wodurch der erste Winkel in relativ einfacher Weise berechnet werden kann.

Die Markierungen bzw. Marker können beispielsweise richtungsweisende Klebestreifen sein, die am Boden, an einem Werkstückträger oder an einem Werkstück angebracht sind. Die Marker bzw. Markierungen können auch Teil eines richtungsweisenden Teppichs oder richtungsweisender Gummimatten insbesondere in verschiedenen Größen sein. Geeignete Markierungen können auch richtungsweisende Aluminiumplättchen z.B. mit aufeloxierten Märker, die an horizontalen Ebenen befestigt sind, sein.

Es kann aber auch eine tragbare Marker-Vorrichtung verwendet werden, die eine rechtwinklig zur Schwerkraft ausrichtbare und mit Markern versehene Platte aufweist. Die tragbare Marker-Vorrichtung kann eine Parallelogramm-Mechanik aufweisen, um insbesondere die Platte relativ schnell in die gewünschte Position zu bringen, wo das erfindungsgemäße Programmierhandgerät eingesetzt werden soll.

Die Marker insbesondere der tragbaren Marker-Vorrichtung können z.B. in Richtung einer vorbestimmten Achse des dem Fußpunkt des Industrieroboters zugeordneten Koordinatensystems ausgerichtet werden. Diese Achse kann z.B. mittels eines Laserstrahl eines Linienlasers, der am feststehenden Fuß des Industrieroboters angebracht ist, der Bedienperson angezeigt werden. Die Marker können dann parallel zum Laserstrahl ausgerichtet werden.

Der erste Winkel kann auch dann basierend auf den mit der Kamera erzeugten Bildern berechnet werden, wenn ein Bild des Bodens, auf dem z.B. der Industrieroboter steht, zur Verfügung steht. Wird das erfindungsgemäße Programmierhandgerät in der Nähe des Industrieroboters bewegt, dann werden zumindest Teilbilder vom Boden mit der Kamera erzeugt, die mit dem vorab aufgenommenen Boden in der Nähe des Industrieroboters verglichen werden können. Aufgrund des Vergleichs ergibt sich eine relative Ausrichtung der Kamera zum Boden, wodurch der erste Winkel berechnet werden kann. Das Bild vom Boden in der Nähe des Industrieroboters lässt sich beispielsweise folgendermaßen erstellen:
Das erfindungsgemäßen Programmierhandgerät oder eine weitere Kamera wird z.B. am Flansch des Industrieroboters angebracht. Wird das erfindungsgemäße Programmierhandgerät verwendet, dann ist dessen Kamera automatisch in Richtung Boden (oder Decke, je nach Ausführungsform) ausgerichtet. Wird die weitere Kamera verwendet, dann wird diese derart ausgerichtet, dass deren Optik in Richtung der Schwerkraft ausgerichtet ist und Bilder vom Boden aufnimmt.

Anschließend wird der Flansch des Industrieroboters derart verfahren, dass im Wesentlichen der Arbeitsbereich des Industrieroboters für eine spätere Teach-In-Programmierung abgedeckt ist. Der Arbeitsbereich kann insbesondere mäanderförmig abgefahren werden. Während des Verfahrens werden Teilbilder von der Draufsicht des Arbeitsbereichs aufgenommen. Für die Einzelaufnahmen mittels der Kamera kann der Industrieroboter kurz anhalten.

Die Teilbilder werden anschließend zu einem Gesamtbild (Gesamtdraufsicht des Arbeitsbereichs) zusammengefügt und beispielsweise im Steuerrechner des Industrieroboter gespeichert. Die Lage des Gesamtbildes bezüglich des Roboterkoordinatensystems ist aufgrund der definierten Orientierung der Kamera bei der Teilbildaufnahme bekannt.

Es kann auch vorgesehen sein, ein (CAD-)Modell einer Bearbeitungszelle, in der der Industrieroboter aufgestellt ist, zu verwenden. Das CAD-Modell ist z.B. im Steuerrechner des Industrieroboters gespeichert und kann alle Komponenten der Bearbeitungszelle umfassen. Bei der Teach-In-Programmierung werden die mit der Kamera des erfindungsgemäßen Programmierhandgerätes erstellten Bilder beispielsweise mittels Bildverarbeitungsmethoden mit dem gespeicherten CAD-Modell verglichen. Aufgrund dieses Vergleichs kann dann ebenfalls der erste Winkel ermitteln werden.

Nach einer Variante des erfindungsgemäßen Programmierhandgeräts weist dieses wenigstens eine zweite Achse und eine von der zweiten Achse unabhängige dritten Achse auf, bezüglich derer die Kamera zumindest indirekt mit dem Griff gelenkig verbunden ist. Die zweite Achse kann nach einer Ausführungsform des erfindungsgemäßen Programmierhandgerätes rechtwinklig zur ersten und dritten Achse ausgerichtet sein.

Wie bereits obenstehend erläutert, umfasst die Orientierung des vorgegebenen Punktes des Industrieroboters drei Freiheitsgrade. Zur Beschreibung der Orientierung im Raum kann beispielsweise das Verfahren Roll, Pitch, Yaw (Rollen, Nicken, Gieren) aus der Luft- und Schifffahrt angewendet werden. Wird die sogenannte Euler-Konvention verwendet, werden die Rotationen nacheinander um die Achsen der neuen Koordinatensysteme durchgeführt, wobei die Reihenfolge der Rotationen angegeben werden muss. Ist z.B. der in kartesischen Koordinaten beschriebenen Z-Achse der Yaw-Winkel, der Y-Achse der Pitch-Winkel und der X-Achse der Roll-Winkel zugeordnet und wird die Reihenfolge Z-Achse, Y-Achse und X-Achse verwendet, dann erfolgt zunächst für die Ermittlung der Orientierung des vorgegebenen Punktes des Industrieroboters eine Drehung um die Z-Achse um einen Yaw-Winkel, dann eine Drehung um einen Pitch-Winkel um die Y-Achse des durch die Drehung um die Z-Achse entstehenden neuen Koordinatensystems und anschließend eine Drehung um einen Roll-Winkel um die X-Achse des wiederum aufgrund der Drehung um die Y-Achse entstehenden neuen Koordinatensystems.

Die Drehung um die Z-Achse wird auch als "Gieren", die Drehung um die Y-Achse wird auch als "Nicken" und die Drehung um die X-Achse wird auch als "Rollen" bezeichnet.

Aufgrund der Ausrichtung der ersten Achse des erfindungsgemäßen Programmierhandgerätes in Richtung der Schwerkraft entspricht der erste Winkel dem Yaw-Winkel. Durch geeignetes Ausrichten der zweiten und dritten Achse kann eine dieser Achsen dem Roll- und die andere Achse dem Pitch-Winkel zugeordnet werden. Somit ist es möglich, aufgrund einer Drehung des erfindungsgemäßen Programmierhandgerätes um die zweite und dritte Achse den Pitch- und Roll-Winkel des vorgegebenen Punktes des Industrieroboters einzustellen. Um ein Überschwingen der zweiten und dritten Achsen bei einer Bewegung des erfindungsgemäßen Programmierhandgerätes zu vermeiden oder zumindest zu verringern, können diese Achsen gedämpft ausgeführt sein.

Bei dieser Variante des erfindungsgemäßen Programmierhandgerätes kann der dem ersten Winkel zugeordnete Yaw-Winkel mittels der von der Kamera aufgenommenen Bilder ermittelt werden.

Das erfindungsgemäße Programmierhandgerät kann eine erste Winkelmessvorrichtung zum Messen eines zweiten Winkels der zweiten Achse, den die Kamera relativ zum Griff bei einer Drehung der Kamera relativ zur zweiten Achse einnimmt, und/oder eine zweite Winkelmessvorrichtung zum Messen eines dritten Winkels der dritten Achse, den die Kamera relativ zum Griff bei einer Drehung der Kamera relativ zur dritten Achse einnimmt, aufweisen. Geeignete Winkelmessvorrichtungen sind z.B. in den zweiten und dritten Achsen verbaute Potentiometer oder Winkelsensoren oder auch Beschleunigungssensoren. Aufgrund der von den beiden Winkelmessvorrichtungen erzeugten Signalen kann z.B. die Roll- und Pitch-Winkel des vorgegebenen Punktes des Industrieroboters mittesl des erfindungsgemäßen Programmierhandgerätes eingestellt werden.

Wenn der Pitch-Winkel einen Winkel von 90° einnimmt, dann sind Yaw- und Roll-Drehungen identisch, d.h. dann geht die dem Roll-Winkel zugeordnete Achse des erfindungsgemäßen Programmierhandgerätes in die erste Achse über. Um eine Mehrdeutigkeit zu vermeiden, kann das erfindungsgemäße Programmierhandgerät derart ausgeführt sein, dass die dem Roll-Winkel zugeordnete Achse des Programmierhandgerätes mechanisch blockiert wird, wenn sie einen Mindestwinkel von z.B. 85° erreicht.

Das erfindungsgemäße Programmierhandgerät kann einen drahtlosen Sender zum Senden von von dem Programmierhandgerät erzeugten Signalen aufweisen. Dann ist es möglich, dass diese Signale, die beispielweise eine Information über den ersten, zweiten oder dritten Winkel aufweisen, drahtlos an den Steuerrechner des Industrieroboters übermittelt werden, damit dieser die Orientierung des vorbestimmten Punktes entsprechend einstellt. Die Signale können aber auch die mit der Kamera aufgenommenen Bilder oder die von den Winkelmessvorrichtungen stammenden Signale umfassen, damit der Steuerrechner z.B. den ersten Winkel berechen kann.

Die Signale sind z.B. Videosignale und können über einen Wirelesskanal mit dem Steuerrechner ausgetauscht werden. Die Signale können im erfindungsgemäßen Programmierhandgerät gebündelt werden. Es ist aber auch denkbar, dass eine am Markt verfügbare Wireless-Webcam über einen eigenen Kommunikationskanal zur Robotersteuerung verfügt, während die anderen Ein-Ausgabeinformationen einen weiteren Wirelesskanal erhalten.

Je nach Ausführungsform kann mit dem erfindungsgemäßen Programmierhandgerät eine Teilorientierung, z.B. eine Drehung des vorgegebenen Punktes des Industrieroboters um die entlang der Schwerkraft verlaufenden Achse, oder die gesamte Orientierung dieses Punktes eingestellt werden.

Um zumindest teilweise auch die Position des vorgegebenen Punktes des Industrieroboters im Raum mit dem erfindungsgemäßen Programmierhandgerät einstellen zu können, kann dieses nach einer Variante auch Eingabemittel zum Bewegen des vorgegebenen Punktes des Industrieroboters aufweisen. Die Eingabemittel können insbesondere eindimensionale Eingabemittel sein, die eine Verfahrrichtung des vorgegebenen Punktes in einer Dimension erlauben, oder zweidimensionale Eingabemittel sein, die eine Verfahrrichtung des vorgegebenen Punktes in zwei Dimension erlauben. Geeignete zweidimensionale Eingabemittel sind beispielsweise Joystick, Touchpad, Trackball, vier Verfahrtasten oder zwei Rändelräder. Die Eingabemittel können auch mehrdimensionale Eingabemittel sein, wie beispielsweise Joystick oder 6D-Maus.

Durch die zweidimensionalen Eingabemittel kann die Bedienperson den vorgegebenen Punkt des Industrieroboters frei innerhalb einer Ebene oder zumindest in zwei definierten Richtungen verfahren. Dadurch ist es möglich, die Bedienung zu erleichtern, da nicht jede Stellung im Raum für das menschliche Handgelenk angenehm ist. Neben der Verfahrrichtung ist es auch möglich, die Geschwindigkeit über die Auslenkung geeigneter Verfahrelemente vorzugeben.

Das erfindungsgemäße Programmierhandgerät kann neben der Verfahreingabemöglichkeit weitere Ein- und/oder Ausgabemöglichkeiten aufweisen, wie z.B. eine Overrideeinstellung, einen Verfahrmodi oder ein sogenanntes Touchup.

Die Kombination aus Industrieroboter und erfindungsgemäßem Programmierhandgerät kann auch derart ausgeführt sein, dass aufgrund der aufgenommenen Bilder die Position des Programmierhandgerätes relativ zu der Ebene, von der die Bilder aufgenommen wurden, berechnet wird und basierend auf der berechneten Position die Position des vorgegebenen Punktes des Industrieroboters eingestellt wird. Dann kann ebenfalls mit dem erfindungsgemäßen Programmierhandgerät nicht nur die Orientierung (bzw. eine Teilorientierung) des vorgegebenen Punktes des Industrieroboters eingestellt werden, sondern auch seine Position (bzw. eine Teilposition).

Das erfindungsgemäße Programmierhandgerät kann demnach neben der Einstellung der Orientierung auch dazu verwendet werden, zusätzlich seine eigene Position im Raum zu bestimmen (6D Trackingsystem). Damit kann mit dem erfindungsgemäße Programmierhandgerät ein Raumpunkt geteached werden.

Das erfindungsgemäße Programmierhandgerät kann auch mit Hilfe einer weiteren montierten Kamera für Augmented-Reality-Anwendungen verwendet werden.

Werden die Marker verwendet, dann kann die Position des erfindungsgemäße Programmierhandgerätes beispielsweise bestimmt werden, indem die Marker nicht nur richtungsbestimmend, sondern auch positionsbestimmend ausgeführt sind. Diese Marker werden z.B. an horizontalen Ebenen des Arbeitsbereiches, z.B. am Boden, platziert. Die Bedienperson legt dabei fest, von wo aus sie den Industrieroboter mittels des erfindungsgemäßen Programmierhandgerätes bedienen möchte. An diesen horizontalen Ebenen des Arbeitsbereichs, z.B. Boden oder Werkstückhalter, werden richtungsweisende und für die Positionsbestimmung eindeutige Marker angebracht. Bei Verwendung einer Weitwinkelkamera für das erfindungsgemäße Programmierhandgerät kann die Anzahl der Marker relativ gering und der Abstand zwischen den Markern entsprechend groß gewählt werden.

Jeder Marker sollte eindeutig sein und es sollte die genaue Position und Orientierung jedes Markers bekannt sein. Zur Einmessung bzw. Platzierung der Marker bezüglich des Industrieroboters kann folgendes Verfahren angewendet werden:
Am Industrieroboter wird ein Laserabstandssensor angebracht, dessen Position bezüglich des Industrieroboters bekannt ist. Der Laserabstandssensor kann z.B. am Flansch des Industrieroboters befestigt werden. Der Industrieroboter wird nun solange z.B. mittels des erfindungsgemäßen Programmierhandgerätes Handverfahren, bis der Laserstrahl des Laserabstandssensors eine Stelle im Arbeitsbereich trifft, an der ein Marker angebracht werden soll. Hier wird ein Marker so platziert, das der Laserstrahl eine ausgezeichnete Stelle des Markers trifft. Mit der gemessenen Abstandsinformation und der Stellung des Industrieroboters kann die Position des Markers ermittelt werden.

Die Ausrichtung der Marker kann z.B. durch eine rein translatorische Bewegung des Industrieroboters in eine definierte Richtung angezeigt werden, z.B. X-Richtung (horizontal) des Roboterfußpunktkoordinatensystem. Der Laserpunkt des Laserabstandssensors bewegt sich dabei auf der Markerebene ebenfalls in diese X-Richtung. Der Marker wird nun entsprechend orientiert.

Der Industrieroboter kann auch so orientiert werden, dass der angebaute Laserabstandssensor in Gravitationsrichtung (Richtung der Schwerkraft) ausgerichtet ist. Der Industrieroboter kann nun ebenfalls solange translatorisch Handverfahren werden ohne dabei die Orientierung zu ändern, bis eine gewünschte Stelle im Arbeitsbereich vom Laserabstandssensor markiert ist. Bei diesem Vorgehen kann die Orientierung des Markers über einen Linienlaser angezeigt werden. Die Stellung des Linienlasers bezüglich des Industrieroboters muss bekannt sein. Der in Richtung der Schwerkraft ausgerichtete Linienlaser zeichnet eine Linie an der gewünschten Stelle. Mit Hilfe der Punkt- und Linienmarkierung der beiden Laser kann der Marker genau ausgerichtet werden.

Das oben beschriebene Verfahren ist auch so anwendbar, dass die Marker im Arbeitsbereich beliebig platziert werden und anschließend deren Position mit Hilfe der Laser und mittels Handverfahren des Industrieroboters ermittelt wird.

Der Laserabstandssensor misst den Z-Abstand (Abstand bezüglich der Achse in Richtung der Schwerkraft) des Markers vom Laserabstandssensorursprung. Die weiteren Koordinaten (X, Y, für die Position und A, B, C für die Orientierung) können aus Positionssensoren des Steuerrechners des Industrieroboters in Verbindung mit dem bekannten Laserabstandssensorursprung ermittelt werden.

Zur Einmessung bzw. Platzierung der Marker bezüglich des Industrieroboters kann auch folgendes Verfahren angewendet werden:
Es wird eine Kamera am Roboter, z.B. an dessen Flansch oder Hand befestigt und über die Roboterstellung in Gravitationsrichtung ausgerichtet. Es kann auch das erfindungsgemäße Programmierhandgerät verwendet werden, wodurch die Kamera automatisch in Richtung der Schwerkraft (Gravitationsrichtung) ausgerichtet ist. Das erfindungsgemäße Programmierhandgerät kann beispielsweise am Flansch, and der Hand, oder einem Arm des Industrieroboters befestigt werden.

Bei diesem Vorgehen sind nicht alle Freiheitsgrade des Industrieroboters zur Ausrichtung der Kamera in Gravitationsrichtung erforderlich, weshalb die Kamera auch an die Struktur z.B. der Achse 3 (Arm) befestigt werden kann.

An den gewünschten Stellen im Arbeitsbereich werden anschließend eindeutige Marker angebracht. Dabei spielt die Orientierung der einzelnen Marker keine Rolle, da diese von der Kamera erfasst werden. Die Kamera wird nun durch translatorisches Handverfahren des Roboters ohne dabei die Orientierung zu ändern so positioniert, dass sich ein Marker im Sichtfeld der Kamera befindet. Durch die senkrechte Blickrichtung der Kamera auf den relevanten Marker ist die Positions- und Orientierungsbestimmung relativ einfach und relativ genau, da wenn, dann nur relativ geringe perspektivische Verzerrungen der Kamera berechnet werden müssen.

In der Steuerungsvorrichtung des Industrieroboters wird zu jedem eindeutig identifizierbaren Marker die gemessene Position (und bei Verwendung der weiteren Kamera auch die Orientierung) bezüglich des Roboterkoordinatensystems gespeichert. Dieser Vermessungsvorgang wird für die restlichen Marker wiederholt.

Später können die vermessenen Marker zur Bestimmung der Position und Orientierung des erfindungsgemäßen Programmierhandgerätes verwendet werden. Die in Gravitationsrichtung ausgerichtete Kamera des von der Bedienperson geführten Programmierhandgerätes muss hierfür einen Marker im Sichtfeld haben. Zunächst wird der Markertyp identifiziert und die entsprechende gespeicherte Markerposition und -orientierung wird geladen. Mit Hilfe des Kamerabildes wird dann außerdem mit Standard-Bildverarbeitungsverfahren das Frame "Marker-Programmierhandgerät" berechnet. Aus dem gespeicherten Markerframe (Position und Orientierung) und dem berechneten Frame "Marker-Programmierhandgerät" kann die Position des Programmierhandgerätes bezüglich des Roboterkoordinatensystems ermittelt werden.

Das erfindungsgemäße Programmierhandgerät kann im Allgemeinen zum Programmieren des Industrieroboters verwendet werden. Das erfindungsgemäße Programmierhandgerät kann insbesondere zum Programmieren des Industrieroboters gemäß folgendem Verfahren verwendet werden, gemäß dem zunächst das erfindungsgemäße Programmierhandgerät im Raum entsprechend einer gewünschten Orientierung, die ein zu bestimmendes Koordinatensystem einnehmen soll, orientiert wird, die momentane Orientierung des Programmierhandgerätes als gewünschte Orientierung des Koordinatensystems durch Betätigen eines Verriegelungsmittels insbesondere des Programmierhandgerätes, verriegelt wird, so dass die Orientierung des Koordinatensystems bei einer weiteren Bewegung des erfindungsgemäßen Programmierhandgerätes unverändert bleibt, und der vorgegebene Punkte in mindestens einer im gewünschten Koordinatensystem definierten Richtung oder Orientierung durch Betätigen der Eingabemittel des Programmierhandgerätes bewegt wird.

Das Verriegelungsmittel kann z.B. eine Taste oder ein Druckknopf sein und/oder kann Teil des erfindungsgemäßen Programmierhandgerätes sein. Somit wird es der Bedienperson erleichtert, den vorgegebenen Punkt durch Betätigen der Eingabemitteln bezüglich wenigstens einer vorgegebenen oder mittels des Programmierhandgerätes vorgebbaren Achse unabhängig von einer Orientierung des Programmierhandgerätes im Raum zu bewegen, nachdem die gewünschte Orientierung des Koordinatensystems verriegelt wurde.

Soll nun anschließend z.B. die Position des vorgegebenen Punktes mittels des Programmierhandgerätes verändert werden, dann kann z.B. das Programmierhandgerät in eine für die Bedienperson relativ angenehme oder zumindest in eine im Vergleich zu der Stellung, in der das Programmierhandgerät zum Zeitpunkt des Verriegelns ausgerichtet ist, angenehmere Stellung gebracht werden, ohne dass sich die Orientierung des Koordinatensystems ändert.

Die Orientierung im Raum des Programmierhandgerätes kann mittels Koordinaten eines dem Programmierhandgerät zugeordneten Handgerätkoordinatensystem beschrieben sein, das mit einem Roboterkoordinatensystem des Industrieroboters abgeglichen ist. Das Handgerätkoordinatensystem und das Roboterkoordinatensystem können insbesondere kartesische Koordinatensysteme sein.

Handelt es sich bei dem vorgegebenen Punkt um den Tool Center Point, dann kann das Handgerätkoordinatensystem mit dem Roboterkoordinatensystem des Industrieroboters derart abgeglichen sein, dass wenigstens eine der Koordinatenachsen des Handgerätkoordinatensystems mit einer der Koordinatenachsen des Werkzeugkoordinatensystem übereinstimmt. Es können aber auch alle Koordinatenachsen des Handgerätkoordinatensystems mit entsprechenden Koordinatenachsen des Werkzeugkoordinatensystem übereinstimmen.

Die übereinstimmenden Koordinatenachsen des Handgerätkoordinatensystems und des Werkzeugkoordinatensystems können mit der Längsachse des Programmierhandgerätes übereinstimmen und/oder können in Werkzeugstoßrichtung des Werkzeugs zeigen. Dann stimmen die Werkzeugstoßrichtung und die Orientierung des Programmierhandgerätes längs seiner Längsachse beim Einstellen der gewünschten Orientierung mit der Längsachse des Programmierhandgerätes überein.

Der vorgegebene Punkt kann entlang genau einer vorgegebenen oder durch das Programmierhandgerät vorgebbaren Achse nach dem Verriegeln der gewünschten Orientierung des Koordinatensystems durch Betätigen der Eingabemittel bewegt werden. Somit kann zunächst in relativ einfacher Weise die gewünschte Orientierung des Koordinatensystems eingestellt werden und anschließend die Position des vorgegebenen Punktes entlang der Achse (Verfahrachse) durch Betätigen der Eingabemittel des Programmierhandgerätes verfahren werden. Für das Verfahren kann das Programmierhandgerät beliebig bewegt oder in eine beliebige Stellung gebracht werden, ohne dass sich die Orientierung des Koordinatensystems ändert.

Die Verfahrachse kann beispielsweise durch die Ausrichtung der Längsachse des Programmierhandgerätes insbesondere zum Zeitpunkt des Verriegelns der gewünschten Orientierung des Koordinatensystems definiert werden oder in Werkzeugstoßrichtung des am Industrieroboter befestigten Werkzeugs insbesondere zum Zeitpunkt des Verriegelns der gewünschten Orientierung des Koordinatensystems zeigen. Im zweiten Fall wird der vorgegebene Punkt demnach in Richtung des Werkzeugstoßpunktes verfahren. Die Verfahrachse kann auch durch die Orientierung einer Koordinatenachse des Handgerätkoordinatensystem oder des Werkzeugkoordinatensystems beispielsweise zum zeitpunkt des Verriegelns der gewünschten Orientierung des Koordinatensystems definiert werden. Die Verfahrachse kann aber auch anderweitig definiert werden, z.B. durch Ausrichten des Programmierhandgerätes beispielsweise nach dem Verriegeln oder bevor dem Einstellen der Orientierung des Koordinatensystems.

Der vorgegeben Punkt kann auch entlang genau einer Verfahrebene durch Betätigen der Eingabemittel bewegt werden, wobei die Verfahrebene durch zwei vorgegebene oder insbesondere durch das Programmierhandgerät vorgebbare Achse nach dem Verriegeln der gewünschten Orientierung des Koordinatensystems definiert ist. Demnach kann zunächst in relativ einfacher Weise die gewünschte Orientierung des Koordinatensystems eingestellt werden und anschließend die Position des vorgegebenen Punktes innerhalb der Verfahrebene durch das Betätigen der Eingabemittel eingestellt werden. Die Verfahrebene wird z.B. durch die Ausrichtung der Längsachse des Programmierhandgerätes, durch die Werkzeugstoßrichtung des am Industrieroboter befestigten Werkzeugs, durch die Orientierung zweier Koordinatenachsen des Handgerätkoordinatensystems oder durch die Orientierung zweier Koordinatenachsen des Werkzeugkoordinatensystems insbesondere zum zeitpunkt des Verriegelns der gewünschten Orientierung des Koordinatensystems definiert. Die Verfahrebene wird gemäß dieser Ausführungsform z.B. zum Zeitpunkt des Verriegelns oder auch zu einem anderen Zeitpunkt, insbesondere nach dem Verriegeln z.B. durch Ausrichten des Programmierhandgerätes definiert.

Es kann auch eine Rotationsachse durch Orientieren des Programmierhandgerätes im Raum nach dem Verriegeln der gewünschten Orientierung des Koordinatensystems definiert werden. Dann kann der vorgegebene Punkt um die Rotationsachse durch Betätigen der Eingabemittel des Programmierhandgerätes gedreht werden. Die Rotationsachse kann insbesondere durch den vorgegebenen Punkt verlaufen. Somit ist es z.B. möglich, zunächst eine relativ grobe Orientierung des vorgegebenen Punktes durch Orientieren des Programmierhandgerätes einzustellen. Nach dem Verriegeln der Orientierung, kann eine gewissen Umorientierung durch Drehen des vorgegebenen Punktes um die Rotationsachse erfolgen. Für die Drehung kann das Programmierhandgerät beliebig bewegt oder ausgerichtet werden, da nach dem Verriegeln die Orientierung des Koordinatensystems nicht mehr durch die Stellung des Programmierhandgerätes verändert wird. Die Rotationsachse kann beispielsweise die Längsachse oder eine der Koordinatenachsen des Handgerätkoordinatensystems sein. Die Rotationsachse kann aber auch beliebig anders definiert werden.

Es kann auch durch Orientieren des Programmierhandgerätes im Raum nach dem Verriegeln der gewünschten Orientierung des Koordinatensystems die Achse definiert werden, bezüglich derer der vorgegebene Punkt durch Betätigen der Eingabemittel des Programmierhandgerätes bewegt wird, wobei diese Achse durch den vorgegebenen Punkt verläuft. Dann kann der vorgegebene Punkt durch Betätigen der des Programmierhandgerätes umorientiert werden, sodass dieser in Richtung der Achse zeigt. Der vorgegebene Punkt kann insbesondere in Richtung dieser Achse solange umorientiert werden, bis er entweder in Richtung dieser Achse ausgerichtet ist oder solange die zweiten Eingabemittel betätigt werden.

Die Geschwindigkeit des Umorientierens kann von der das Programmierhandgerät bedienenden Person auch eingestellt werden. Neben der Umorientierungsrichtung kann diese Person über den Grad der Auslenkung spezieller Eingabeelemente auch die Geschwindigkeit variieren. Abgesehen von einer kontinuierlichen Umorientierungsbewegung kann auch eine schrittweise Bewegung kommandiert werden. Die Werkzeugstoßachse kann sich dabei dann pro Betätigungsvorgang, z.B. durch Tastendruck um einen vorgegebenen wählbaren Winkelwert in die definierte Richtung bewegen.

Die Orientierung des vorgegebenen Punktes kann während einer Bewegung des Programmierhandgerätes entsprechend der Orientierung des Programmierhandgerätes im Raum vor dem Erreichen und Verriegeln der gewünschten Orientierung des Koordinatensystems nachgefahren werden. Es ist aber auch möglich, dass zunächst das Programmierhandgerät im Raum entsprechend der gewünschten Orientierung des Koordinatensystems im Raum ohne ein Nachführen der Orientierung des vorgegebenen Punktes orientiert wird. Ein weiteres Eingabemittel insbesondere des Programmierhandgerätes wird dann betätigt, wenn das Programmierhandgerät entsprechend der gewünschten Orientierung ausgerichtet ist. Die Roboterachsen werden dann derart bewegt, dass der vorgegebene Punkt entsprechend der Orientierung des Programmierhandgerätes zum Zeitpunkt des Betätigens des weiteren Eingabemittels orientiert wird und die gewünschte Orientierung des vorgegebenen Punktes wird durch Betätigen des Verriegelungsmittels verriegelt, sodass die Orientierung des vorgegebenen Punktes bei einer Bewegung des Programmierhandgerätes unverändert bleibt.

Ausführungsbeispiele der Erfindung sind exemplarisch in den beigefügten schematischen zeichnungen dargestellt. Es zeigen:
- Fig. 1: einen Industrieroboter,
- Figs. 2-4: verschiedenen Ansichten und Stellungen eines Programmiergerätes,
- Fig. 5: ein Koordinatensystem,
- Fig. 6: das Programmierhandgerät in teilweise geschnittener Darstellung,
- Fig. 7: ein Bild,
- Figs. 8, 9: Marker-Vorrichtung.

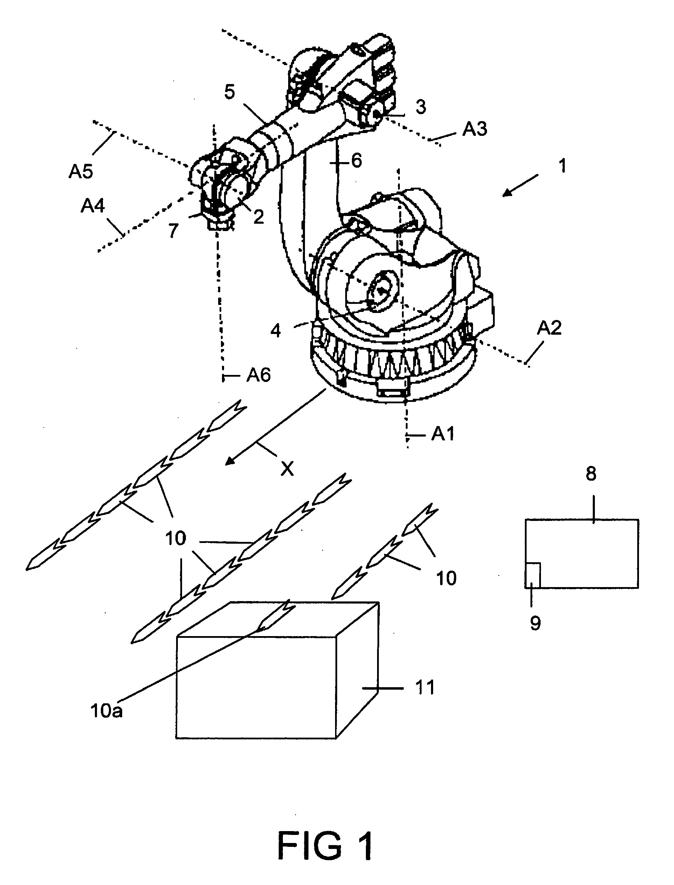

Die Fig. 1 zeigt einen Industrieroboter 1 mit einer Kinematik für Bewegungen in beispielsweise sechs Freiheitsgraden. Der Industrieroboter 1 weist in allgemein bekannter Weise Gelenke 2 bis 4, Hebel 5, 6, sechs Bewegungsachsen A1 bis A6 und einen Flansch 7 auf.

Jede der Bewegungsachsen A1 bis A6 wird von einem nicht näher dargestellten Antrieb bewegt. Die Antriebe umfassen beispielsweise jeweils einen elektrischen Motor und Getriebe, wie es dem Fachmann allgemein bekannt ist.

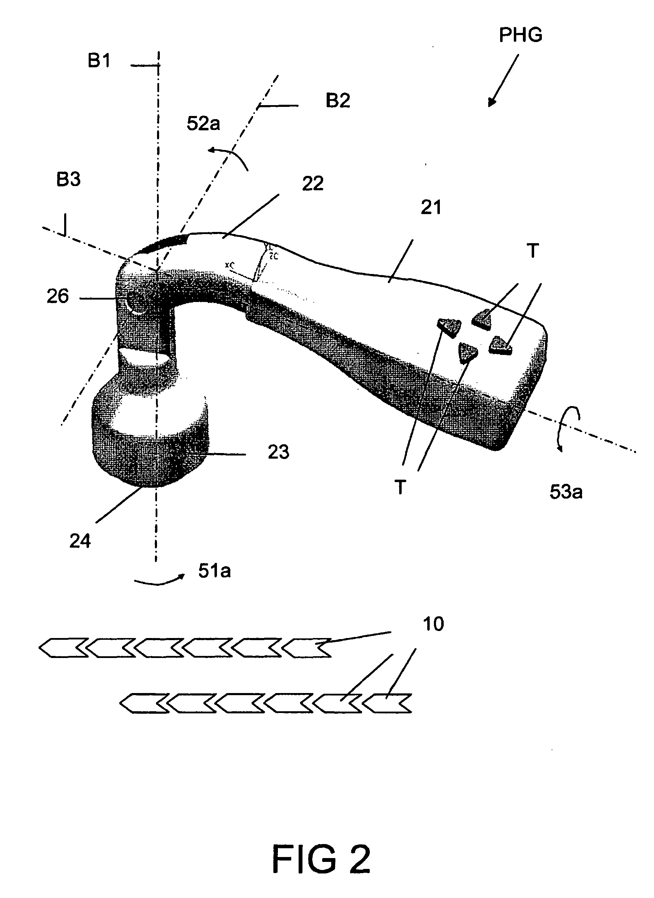

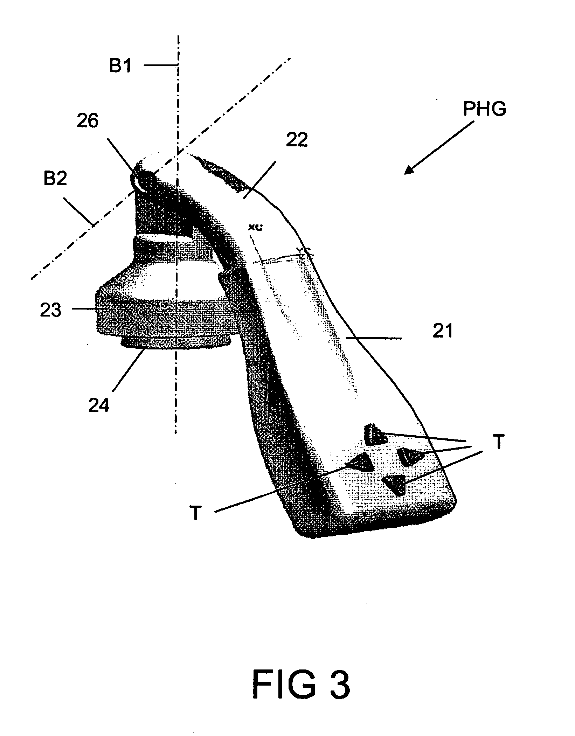

Der Industrieroboter 1 weist ferner einen Steuerrechner 8 auf, der mit den Antrieben des Industrieroboters 1 in nicht dargestellter Weise verbunden ist und diese in allgemein bekannter Weise mittels eines auf dem Steuerrechner 8 laufenden Rechnerprogramms steuert, sodass der Flansch 7 des Industrieroboters 1 eine vorgegebene Bewegung durchführt. Um das den Industrieroboter 1 steuernde Rechnerprogramm zu erstellen, wird im Falle des vorliegenden Ausführungsbeispiels ein in den Figuren 2 bis 4 näher dargestelltes Programmierhandgerät PHG verwendet.

Im Falle des vorliegenden Ausführungsbeispiels weist das Programmiergerät PHG einen als Handgriff 21 ausgebildetes erstes Geräteteil, ein als Winkelelement 22 ausgebildetes zweites Geräteteil, ein drittes Geräteteil 23 und eine Kamera 24 auf. Die Kamera 24 ist beispielsweise eine Digitalkamera z.B. in Form einer Web-CAM und das dritte Geräteteil 23 stellt im Falle des vorliegenden Ausführungsbeispiels ein Gehäuse für die Kamera 24 dar, in dem die Kamera 24 derart angeordnet und ausgerichtet ist, dass dessen bildgebende Optik 25 Bilder entlang einer Achse B1 aufnehmen kann.

Im Falle des vorliegenden Ausführungsbeispiels ist das dritte Geräteteil 23 mittels eines Gelenkes 26 schwenkbar bezüglich einer Neigungsachse B2 am Winkelelement 22 befestigt. Ferner ist das dritte Geräteteil 23 derart ausgeführt, dass die Neigungsachse B2 und die Achse B1 stets rechtwinklig zueinander ausgerichtet sind.

Im Falle des vorliegenden Ausführungsbeispiels ist das Winkelelement 22 mittels eines nicht näher dargestellten Drehlagers bezüglich einer Drehachse B3 drehbar am Handgriff 21 gelagert. Dabei sind im Falle des vorliegenden Ausführungsbeispiels die Drehachse B3 und die Neigungsachse B2 rechtwinklig zueinander ausgerichtet und eines der beiden Enden des Winkelelements 22 ist in den eine längliche Ausdehnung aufweisenden Handgriff 22 derart eingeführt, dass die Drehachse B3 mit der nicht näher dargestellten Längsachse des Handgriffs 21 übereinstimmt.

Aufgrund der Dreh- und Neigungsachsen B2, B3 und der auf die Kamera 24 und dessen Gehäuse in Form des dritten Geräteteils 23 wirkenden Schwerkraft richtet sich das dritte Geräteteil 23 mit der Kamera 24 über die Neigungsachse B2 und über die Drehachse B3 stets automatisch derart aus, dass die Achse B1 in Richtung der Schwerkraft verläuft. Dadurch ist die Optik 25 der Kamera 24 ebenfalls stets in Richtung der Schwerkraft ausgerichtet, sodass stets die Kamera 24 im Falle des vorliegenden Ausführungsbeispiels insbesondere Bilder vom Boden aufnehmen kann. Das Programmierhandgerät PHG kann aber auch derart ausgeführt sein, dass die Optik 25 der Kamera 24 stets nach oben in Richtung der Schwerkraft ausgerichtet ist.

Ferner sind im Falle des vorliegenden Ausführungsbeispiels das Gelenk 26 und das Drehlager gedämpft, um ein Überschwingen der Dreh- und Neigungsachsen B2, B3 bei einer Bewegung des Programmierhandgerätes PHG zu vermeiden oder zumindest zu verringern.

Aufgrund der Krümmung des Winkelelements 22 ergibt sich im Falle des vorliegenden Ausführungsbeispiels ein relativ niedriger Schwerpunkt der Kamera 24 im Vergleich zum Handgriff 21, was eine zuverlässige Ausrichtung der Kamera 24 entlang der Schwerkraft unterstützen kann.

Die Figuren 2 bis 4 zeigen das Programmierhandgerät PHG für verschiedene Stellungen des Handgriffs 21 im Raum. Wie es den Figuren 2 bis 4 zu entnehmen ist, ist aufgrund des Gelenks 26, des Drehlagers und der Schwerkraft die Achse B1 stets in Richtung der Schwerkraft ausgerichtet.

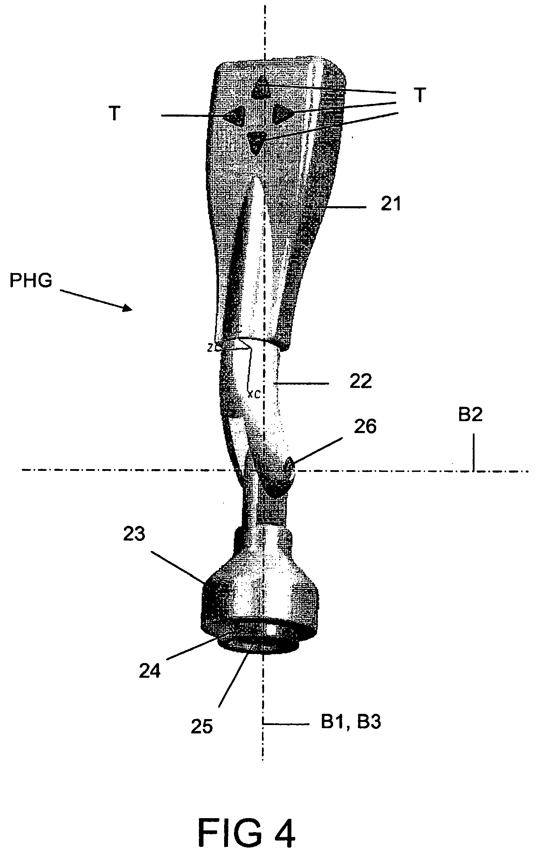

Wie es in der Fig. 4 zu sehen ist, ist es möglich, dass die Achse B1 und die Drehachse B3 aufeinahnderfallen können. Damit dies verhindert werden kann, kann das Programmierhandgerät PHG mechanisch derart ausgeführt sein, dass das Gelenk 26 mit einer mechanischen Sperrung versehen ist, sodass die Drehachse B3 nur einen Maximalwinkel bezogen auf eine horizontal verlaufende Ebene aufweist. Dieser Maximalwinkel ist z.B. 85°.

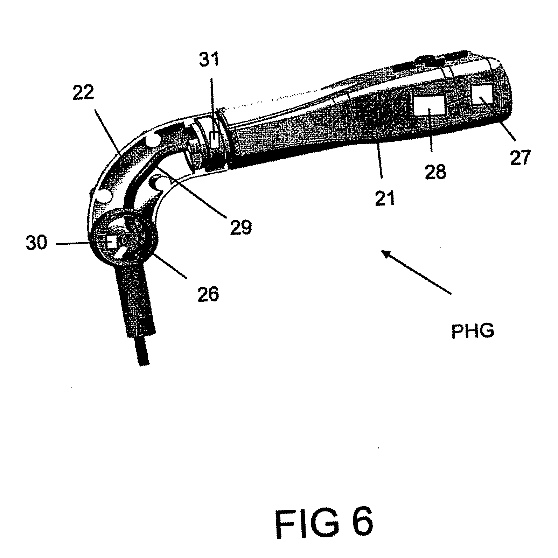

Das Programmierhandgerät PHG ist insbesondere dafür vorgesehen, die Orientierung des Flansches 7 des Industrieroboters 1 einzustellen. Damit dies im Falle des vorliegenden Ausführungsbeispiels möglich ist, ist das Programmierhandgerät PHG eingerichtet, mit dem Steuerrechner 8 über einen im Handgriff 21 angeordneten Sender 27 und einem Empfänger 9 des Steuerrechners 8 drahtlos zu kommunizieren. Der Sender 27 ist in der Figur 6 gezeigt, die das Programmierhandgerät PHG in teilweise geschnittener Darstellung zeigt.

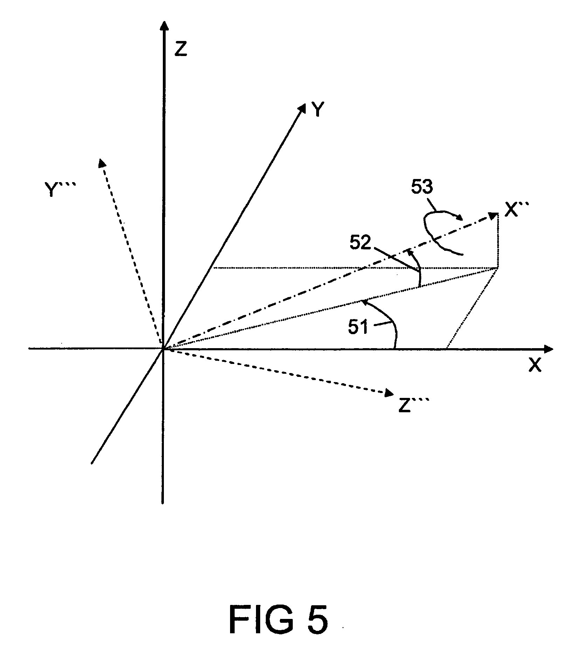

Im Falle des vorliegenden Ausführungsbeispiels weist die Orientierung des Flansches 7 drei Freiheitsgrade auf, es wird zur Beschreibung der Orientierung im Raum das Verfahren Roll, Pitch, Yaw (Rollen, Nicken, Gieren) aus der Luft- und Schifffahrt angewendet und es wird die sogenannte Euler-Konvention verwendet. Das Basiskoordinatensystem des Industrieroboters hat im Falle des vorliegenden Ausführungsbeispiels die kartesischen Koordinaten X, Y, Z, wobei die Z-Achse in Richtung Schwerkraft ausgerichtet ist. Das Basiskoordinatensystem ist in der Figur 5 gezeigt.

Um die Orientierung des Flansches 7 im Raum zu bestimmen, werden drei Rotationen nacheinander um die Achsen aufgrund der jeweiligen Rotation entstehenden neuen Koordinatensysteme durchgeführt, wobei im Falle des vorliegenden Ausführungsbeispiels in den kartesischen Koordinaten beschriebenen Z-Achse der Yaw-Winkel, der Y-Achse der Pitch-Winkel und der X-Achse der Roll-Winkel zugeordnet ist und die Reihenfolge Z-Achse, Y-Achse und X-Achse verwendet wird. Dann erfolgt zunächst für die Ermittlung der Orientierung des Flansches 7 des Industrieroboters 1 eine Drehung um die Z-Achse um einen Yaw-Winkel 51, dann eine Drehung um einen Pitch-Winkel 52 um die Y'-Achse des durch die Drehung um die Z-Achse entstehenden neuen Koordinatensystems und anschließend eine Drehung um einen Roll-Winkel 53 um die X"-Achse des wiederum aufgrund der Drehung um die Y'-Achse entstehenden neuen Koordinatensystems (siehe Figur 5).

Die Drehung um die Z-Achse wird auch als "Gieren", die Drehung um die Y'-Achse wird auch als "Nicken" und die Drehung um die X"-Achse wird auch als "Rollen" bezeichnet.

Im Falle des vorliegenden Ausführungsbeispiels ergibt sich der Yaw-Winkel 51 aufgrund einer Drehung des Programmierhandgerätes PHG um seine Achse B1, z.B. in Richtung eines in der Figur 2 gezeigten Pfeils 51a.

Der für den Flansch 7 bestimmte Yaw-Winkel 51 ergibt sich im Falle des vorliegenden Ausführungsbeispiels aufgrund von mit der Kamera 24 aufgenommenen Bildern.

Um den Yaw-Winkel 51 zu berechnen, sind im Falle des vorliegenden Ausführungsbeispiels in den Figuren 1 und 2 gezeigte Marker 10 auf dem Boden, auf dem der Industrieroboter 1 steht, angebracht. Im Falle des vorliegenden Ausführungsbeispiels sind die Marker 10 pfeilförmig ausgeführt und weisen in Richtung der X-Achse des Basiskoordinatensystems des Industrieroboters 1. Ferner ist ein Marker 10a auf einer zum Boden parallelen Fläche eines Werkstücks 11 angebracht, der ebenfalls in Richtung der X-Achse ausgerichtet ist.

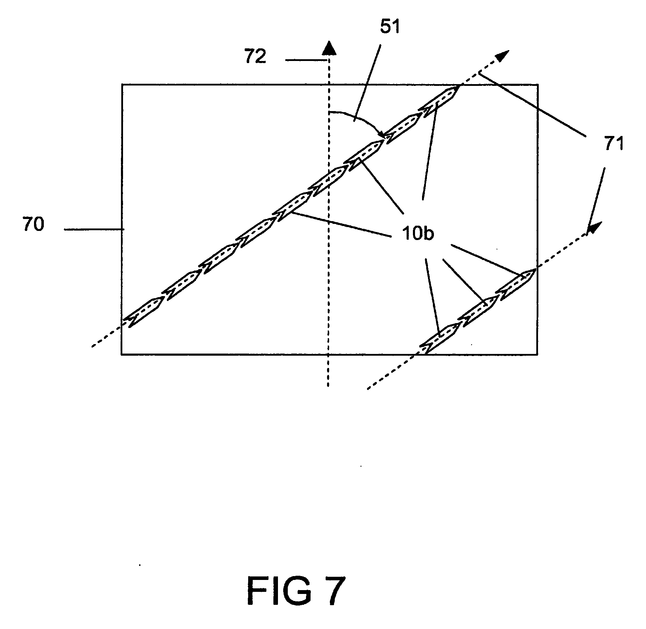

Befindet sich eine in den Figuren nicht näher dargestellte Bedienperson mit dem Programmierhandgerät PHG im Arbeitsraum des Industrieroboters 1, so nimmt die Kamera 24 Bilder vom Boden auf. Eines der Bilder 70 ist in der Figur 7 beispielhaft gezeigt. Da die Kamera 24 in Richtung der Schwerkraft ausgerichtet ist, umfassen die Bilder 70 Abbilder 10b der auf dem Boden oder auf dem Werkstück 11 angeordneten Marker 10, 10a. Da die Marker 10, 10a in Richtung der X-Achse des Basiskoordinatensystems des Industrieroboters 1 ausgerichtet sind, verlaufen die Abbilder 10b der Marker 10, 10a im Bild 70 in Richtung von Pfeilen 71. Aufgrund der Ausrichtungen der Abbilder 10b der Marker 10, 10a längs der Pfeile 71 ist es mittels einer Bildverarbeitung des Bildes 70 bzw. eines dem Bild 70 zugeordneten Bilddatensatzes möglich, den Yaw-Winkel 51 z.B. bezüglich einer vorgegebenen Pfeilrichtung eines Pfeils 72 zu berechnen.

Im Falle des vorliegenden Ausführungsbeispiels ist es vorgesehen, dass das Programmierhandgerät PHG die den Bildern 70 zugeordneten Bilddatensätze über den Sender 27 an die Steuervorrichtung 8 übermittelt, die daraufhin mittels einer Bildverarbeitung der Bilddatensätze den Yaw-Winkel 51 errechnet und entsprechend die Orientierung des Flansches 7 ändert, indem die Motoren des Industrieroboters 1 entsprechend angesteuert werden.

Alternativ kann es auch vorgesehen sein, dass das Programmierhandgerät PHG eine Rechenvorrichtung 28, z.B. einen Mikroprozessor, aufweist, der den Yaw-Winkel 51 aufgrund der Bilder 70 berechnet und dem Steuerrechner 8 den berechneten Yaw-Winkel übermittelt. Die Kamera 24 ist mittels einer innerhalb dem Winkelelement 22 verlaufenden elektrischen Leitung 29 mit der Rechenvorrichtung 28 bzw. dem Sender 27 verbunden. Auch ist es möglich, dass die Kamera 24 als solches einen Sender aufweist, mit dem die Bilddatensätze an die Steuervorrichtung 8 übermittelt werden können.

Im Falle des vorliegenden Ausführungsbeispiels umfasst das Programmierhandgerät PHG zwei Winkelmessvorrichtungen, die jeweils ein Potentiometer 30, 31 aufweisen. Das Potentiometer 30 wirkt mit dem Gelenk 26 und das Potentiometer 31 wirkt mit dem Drehlager zusammen. Je nach Stellung des Gelenks 26 bzw. des Drehlagers haben die Potentiometer 30, 31 entsprechende elektrische Widerstände, die entweder mit der Rechenvorrichtung 28 oder mittels des Steuerrechners 8 verarbeitet werden. Aufgrund der elektrischen Widerstände kann somit die Drehung der Kamera 24 relativ zu den Neigungs- und Drehachsen B2, B3 bezüglich Pfeilen 52a, 53a berechnet werden.

Die den Potentiometern 30, 31 zugeordneten elektrischen Widerstände sind ein Maß für die einzustellenden Roll- und Pitch-Winkel 52, 53 des Flansches 7. Im Falle des vorliegenden Ausführungsbeispiels kann mit einer Drehung des Programmierhandgerätes PHG bezüglich der Neigungsachse B2 in Richtung des Pfeils 52a der Pitch-Winkel 52 mit einer Drehung des Programmierhandgerätes PHG bezüglich der Drehachse B3 in Richtung des Pfeils 53a der Roll-Winkel 53 für die Orientierung des Flansches 7 eingestellt werden.

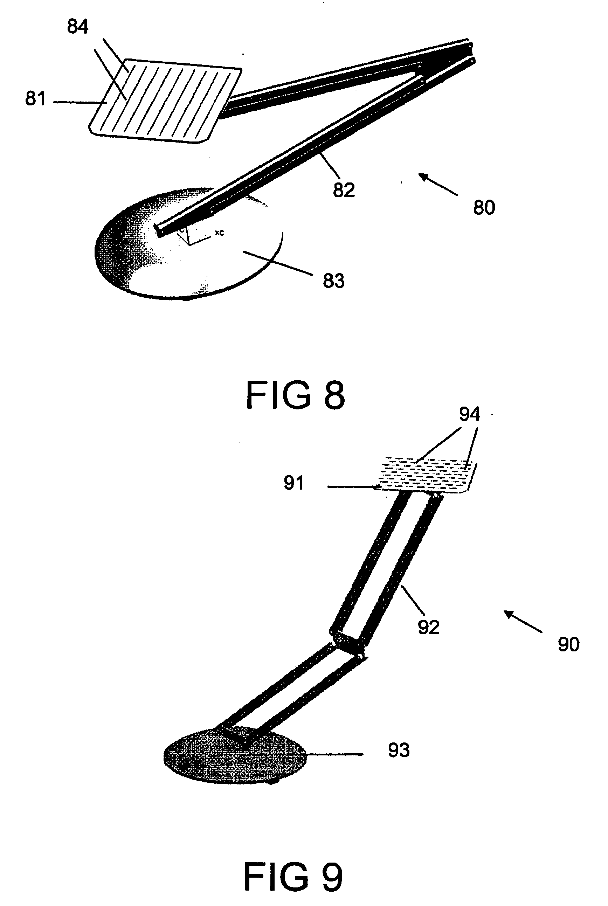

Die Figuren 8 und 9 zeigen jeweils eine tragbare Marker-Vorrichtung 80, 90 mit einer Platte 81, 91, einer Parallelogramm-Mechanik 82, 92 und einem Standfuß 83, 93. Mittels der Parallelogramm-Mechaniken 82, 92 ist es möglich, die Platten 81, 91 horizontal auszurichten. Die nach oben zeigenden Oberflächen der Platten 81, 91 sind jeweils mit Markern 84, 94 versehen. Die Marker 84 der Platte 81 sind linienförmig ausgebildet und die Marker 94 der Platte 91 sind ähnlich der Marker 10 ausgeführt.

Die Marker-Vorrichtungen 80, 90 können in Verbindung mit dem Programmierhandgerät PHG verwendet werden, um die Orientierung des Flansches 7 einzustellen. Dazu kann die Bedienperson das Programmierhandgerät PHG über die Platte 81, 91 halten, sodass die Kamera 24 Bilder von den Markern 81, 91 aufnimmt. Aufgrund einer Bildverarbeitung der diesen Bildern zugeordneten Bilddatensätzen basierend auf den Abbildern der Markern 81, 91 in den Bildern kann dann der Yaw-Winkel 51 für den Flansch 7 berechnet werden.

Um die Marker-Vorrichtungen 80, 90 derart auszurichten, dass z.B. die Marker 81, 91 entlang der X-Achse des Basiskoordinatensystems des Industrieroboters 1 ausgerichtet sind, kann am Fußpunkt des Industrieroboters 1 ein nicht dargestellter Laser vorgesehen sein, dessen Laserstrahl in Richtung der X-Achse des Basiskoordinatensystems zeigt.

Der Yaw-Winkel 51 für den Flansch 7 kann auch ohne die Verwendung der Marker 10 mit dem Programmierhandgerät PHG eingestellt werden. So ist es beispielsweise möglich, ein Bild des Bodens bzw. eines Teils des Bodens zur Verfügung zu stellen, mit dem dann die mit der Kamera 24 aufgenommenen Bilder verglichen werden. Aufgrund des Vergleichs kann dann die Ausrichtung der Kamera 24 relativ zu diesem Teil des Bodens ermittelt werden, woraus sich der einzustellende Yaw-Winkel 51 ermitteln lässt.

Wird das Programmierhandgerät PHG in der Nähe des Industrieroboters 1 verwendet, dann kann z.B. das Bild vom relevanten Boden folgendermaßen erstellt werden:
Das Programmierhandgerät PHG wird z.B. am Flansch 7 des Industrieroboters 1 befestigt. Die Kamera 24 ist dann auf den Boden ausgerichtet.

Anschließend wird der Flansch 7 des Industrieroboters 1 derart verfahren, dass im Wesentlichen der Arbeitsbereich des Industrieroboters 1 mit der Kamera 24 aufgenommen wird. Der Arbeitsbereich wird z.B. insbesondere mäanderförmig abgefahren. Während des Verfahrens nimmt die Kamera 24 Teilbilder von der Draufsicht des Arbeitsbereichs, d.h. vom Boden auf.

Für die Einzelaufnahmen wird der Industrieroboter 1 kurz angehalten.

Die Teilbilder werden anschließend zu einem Gesamtbild des Bodens zusammengefügt und beispielsweise im Steuerrechner 8 des Industrieroboter 1 gespeichert. Die Lage des Gesamtbildes bezüglich des Basiskoordinatensystems ist aufgrund der definierten Orientierung der Kamera 24 bei der Teilbildaufnahme bekannt.

Im Falle des vorliegenden Ausführungsbeispiels kann mit dem Programmierhandgerät PHG auch zumindest teilweise die Position des Flansches 7 im Raum eingestellt werden. Dazu umfasst das Programmierhandgerät Eingabemittel, im Falle des vorliegenden Ausführungsbeispiels vier Eingabetasten T, mit denen der Flansch 7 in einer Ebene durch Betätigen der Eingabetasten T verfahren werden kann.

## Patentansprüche

1. Programmierhandgerät zum Programmieren eines Industrieroboters, aufweisend einen Griff (21), **gekennzeichnet durch** eine Kamera (24) mit einer bildgebenden Optik (25), wobei die Kamera (24) derart zumindest indirekt mit dem Griff (21) gelenkig verbunden ist, dass sich die bildgebende Optik (25) der Kamera (24) unabhängig von der Stellung des Griffs (21) im Raum in Richtung der Schwerkraft selbsttätig ausrichtet, und zumindest indirekt derart mit dem Griff (21) gelenkig verbunden ist, dass bei einer Drehung des Griffs (21) um eine in Richtung der Schwerkraft verlaufenden ersten Achse (B1) sich die Optik (25) der Kamera (24) entsprechend der Drehung des Griffs (21) um die erste Achse (B1) dreht.

2. Programmierhandgerät nach Anspruch 1, das derart ausgeführt ist, dass es aufgrund von mit der Kamera (24) aufgenommenen Bildern (70) einer Ebene rechtwinklig zur ersten Achse (B1) einen ersten Winkel (51), der einer Drehung des Griffs (21) um die erste Achse (B1) zugeordnet ist, berechnet.

3. Programmierhandgerät nach Anspruch 1 oder 2, aufweisend wenigstens eine zweite Achse (B2) und eine von der zweiten Achse (B2) unabhängige dritten Achse (B3), bezüglich derer die Kamera (24) zumindest indirekt mit dem Griff (21) gelenkig verbunden ist.

4. Programmierhandgerät nach Anspruch 3, wobei die zweite Achse (B2) rechtwinklig zur ersten und zur dritten Achse (B1, B3) ausgerichtet ist.

5. Programmierhandgerät nach Anspruch 3 oder 4, aufweisend eine erste Winkelmessvorrichtung (30) zum Messen eines zweiten Winkels (52) der zweiten Achse (B2), den die Kamera (24) relativ zum Griff (21) bei einer Drehung des Griffs (21) relativ zur zweiten Achse (B2) einnimmt, und/oder eine zweite Winkelmessvorrichtung (31) zum Messen eines dritten Winkels (53) der dritten Achse (B3), den die Kamera (24) relativ zum Griff (21) bei einer Drehung des Griffs (21) relativ zur dritten Achse (33) einnimmt.

6. Programmierhandgerät nach einem der Ansprüche 1 bis 5, aufweisend einen drahtlosen Sender (27) zum Senden von von dem Programmierhandgerät (PHG) erzeugten Signalen.

7. Programmierhandgerät nach einem der Ansprüche 1 bis 6, aufweisend Eingabemittel (T) zum Bewegen eines vorgegebenen Punktes (7) eines Industrieroboters (1) in Abhängigkeit des Programmierhandgerätes (PHG).

8. Vorrichtung aufweisend einen Industrieroboter (1) und ein Programmierhandgerät (PHG) nach einem der Ansprüche 1 bis 7 zum Programmieren des Industrieroboters (1).

9. Vorrichtung nach Anspruch 8, deren Industrieroboter (1) einen vorbestimmten Punkt (7) aufweist, dessen Orientierung im Raum zumindest teilweise durch eine Bewegung des Griffs (21) des Programmierhandgerätes (PHG) während des Programmierens des Industrieroboters (1) einstellbar ist.

10. Vorrichtung nach Anspruch 9, bei der die Kamera (24) des Programmierhandgerätes (PHG) zumindest indirekt derart mit dem Griff (21) gelenkig verbunden ist, dass bei einer Drehung des Griffs (21) um die entlang der Schwerkraft ausgerichteten ersten Achse (B1) sich die Optik (25) der Kamera (24) entsprechend der Drehung des Griffs (21) um die erste Achse (B1) dreht, das Programmierhandgerät (PHG) eine zur ersten Achse (B1) rechtwinklig ausgerichtete zweiten Achse (B2) und eine zur zweiten Achse (B2) rechtwinklig ausgerichtete dritte Achse (B3) aufweist, bezüglich derer die Kamera (24) zumindest indirekt mit dem Griff (21) gelenkig verbunden ist, und die Orientierung im Raum des vorbestimmten Punktes (2) des Industrieroboters (1) aufgrund einer Drehung des Griffes (21) bezüglich der ersten, zweiten und dritten Achsen (B1, B2, B3) einstellbar ist.

11. Vorrichtung nach einem der Ansprüche 8 bis 10, die derart eingerichtet ist, dass sie aufgrund von mit der Kamera (24) aufgenommenen Bildern (70) einer Ebene rechtwinklig zur ersten Achse (B1) den ersten Winkel (51), der einer Drehung des Griffs (21) um die erste Achse (B1) zugeordnet ist, berechnet.

12. Vorrichtung nach Anspruch 11, aufweisend Marker (10, 10a, 84, 94), die auf der zur ersten Achse (B1) rechtwinklig ausgerichteten Ebene angeordnet sind und mit deren Hilfe die Vorrichtung den ersten Winkel (51) berechnet.

13. Vorrichtung nach einem der Anspruch 11 oder 12, bei der das Programmierhandgerät (PHG) und/oder ein Steuerrechner (8) des Industrieroboters (1) den ersten Winkel (51) berechnet.

14. Vorrichtung nach einem der Ansprüche 11 bis 13, bei der die Ebene Marker (10, 10a, 84, 94) aufweist, deren Abbildungen in den mit der Kamera (24) aufgenommenen Bilden (70) die Vorrichtung für das Berechnen des ersten Winkels (51) verwendet.

15. Vorrichtung nach einem der Ansprüche 11 bis 14, die derart eingerichtet ist, dass sie aufgrund der aufgenommenen Bilder (20) die Position des Programmierhandgerätes (PHG) relativ zur Ebene berechnet und basierend auf der berechneten Position die Position des vorgegebenen Punktes (7) des Industrieroboters (1) einstellt.

16. Vorrichtung nach einem der Ansprüche 11 bis 14, aufweisend eine tragbare Marker-Vorrichtung (80, 90), die eine rechtwinklig zur Schwerkraft ausrichtbare und mit Markern (10, 10a, 84, 94) versehene Platte (81, 91) aufweist, wobei das Programmierhandgerät (PHG) derart ausgeführt ist, dass es aufgrund von mit der Kamera (24) aufgenommenen Bildern (70) von der mit den Markern (10, 10a, 84, 94) versehenen Platte (81, 91) bei einer Drehung des Griffs (21) um die erste Achse (B1) den ersten Winkel (51) berechnet.

17. Vorrichtung aufweisend ein Programmierhandgerät (PHG) nach einem der Ansprüche 1 bis 7 und eine tragbare Marker-Vorrichtung (80, 90), die eine rechtwinklig zur Schwerkraft ausrichtbare mit Markern (84, 90) versehene Platte (81, 91) aufweist, wobei das Programmierhandgerät (PHG) derart ausgeführt ist, dass es aufgrund von mit der Kamera (24) aufgenommenen Bildern (70) von der mit den Markern (84, 94) versehenen Platte (81, 91) bei einer Drehung des Griffs (21) um die erste Achse (B1) den ersten Winkel (51) berechnet.

## Claims

1. Programming hand tool for programming an industrial robot, comprising a grip (21), **characterised by** a camera (24) with an imaging lens (25), wherein the camera (24) is at least indirectly connected by articulation to the grip (21) such that the imaging lens (25) of the camera (24) is aligned spatially automatically in the direction of gravity independently of the position of the grip (21), and is connected by articulation at least indirectly to the grip (21) such that upon rotation of the grip (21) about a first axis (B1) running in the direction of gravity the lens (25) of the camera (24) rotates about the first axis (B1) according to the rotation of the grip (21).

2. Programming hand tool according to claim 1, which is designed such that on the basis of images (70) taken by the camera (24) of a plane at right angles to the first axis (B1) it calculates a first angle (51), which is assigned to a rotation of the grip (21) about the first axis (B1).

3. Programming hand tool according to claim 1 or 2, comprising at least one second axis (B2) and a third axis (B3) independent of the second axis (B2), in relation to which the camera (24) is connected by articulation to the grip (21) at least indirectly.

4. Programming hand tool according to claim 3, wherein the second axis (B2) is aligned at right angles to the first and to the third axis (B1, B3).

5. Programming hand tool according to claim 3 or 4, comprising a first angle measuring device (30) for measuring a second angle (52) of the second axis (B2), which the camera (24) adopts relative to the grip (21) upon rotation of the grip (21) relative to the second axis (B2), and/or a second angle measuring device (31) for measuring a third angle (53) of the third axis (B3), which the camera (24) adopts relative to the grip (21) upon rotation of the grip (21) relative to the third axis (33).

6. Programming hand tool according to one of claims 1 to 5, comprising a wireless transmitter (27) for sending signals generated by the programming hand tool (PHT).

7. Programming hand tool according to one of claims 1 to 6, comprising input means (T) for moving a predetermined point (7) of an industrial robot (1) as a function of the programming hand tool (PHT).

8. Device comprising an industrial robot (1) and a programming hand tool (PHT) according to one of claims 1 to 7 for programming the industrial robot (1).

9. Device according to claim 8, the industrial robot (1) of which has a predetermined point (7), the orientation of which in space can be adjusted at least partly by moving the grip (21) of the programming hand tool (PHT) during the programming of the industrial robot (1).

10. Device according to claim 9, in which the camera (24) of the programming hand tool (PHT) is connected by articulation at least indirectly to the grip (21) such that upon rotation of the grip (21) about the first axis (B1) aligned along the line of gravity the lens (25) of the camera (24) rotates according to the rotation of the grip (21) about the first axis (B1), the programming hand tool (PHT) comprises a second axis (B2) aligned at right angles to the first axis (B1) and a third axis (B3) aligned at right angles to the second axis (B2), with respect to which the camera (24) is connected by articulation at least indirectly to the grip (21), and the orientation in space of the predetermined point (2) of the industrial robot (1) can be adjusted in relation to the first, second and third axes (B1, B2, B3) on the basis of a rotation of the grip (21).

11. Device according to one of claims 8 to 10, which is set up such that on the basis of images (70) taken by the camera (24) of a plane at right angles to the first axis (B1) it calculates the first angle (51) which is assigned to a rotation of the grip (21) about the first axis (B1).

12. Device according to claim 11 comprising markers (10, 10a, 84, 94) which are arranged on the plane aligned at right angles to the first axis (B1) and by means of which the device calculates the first angle (51).

13. Device according to one of claims 11 or 12, in which the programming hand tool (PHT) and/or a control calculator (8) of the industrial robot (1) calculates the first angle (51).

14. Device according to one of claims 11 to 13, in which the plane comprises markers (10, 10a, 84, 94), the images of which in the image (70) taken by the camera (24) are used by the device for calculating the first angle (51).

15. Device according to one of claims 11 to 14, which is set up so that on the basis of the taken images (20) it calculates the position of the programming hand tool (PHT) relative to the plane and on the basis of the calculated position adjusts the position of the predetermined point (7) of the industrial robot (1).

16. Device according to one of claims 11 to 14, comprising a portable marker device (80, 90) which comprises a board (81, 91) which can be aligned at right angles to the line of gravity and is provided with markers (10, 10a, 84, 94), wherein the programming hand tool (PHT) is designed such that on the basis of images (70) taken by the camera (24) of the board (81, 91) provided with markers (10, 10a, 84, 94) upon rotation of the grip (21) about the first axis (B1) it calculates the first angle (51).

17. Device comprising a programming hand tool (PHT) according to one of claims 1 to 7 and a portable marker device (80, 90) which comprises a board (81, 91) provided at right angles to the line of gravity, wherein the programming hand tool (PHT) is designed such that on the basis of images (70) taken by the camera (24) of the board (81, 91) provided with the markers (84, 94) upon rotation of the grip (21) about the first axis (B1) it calculates the first angle (51).

## Revendications

1. Appareil manuel de programmation pour programmer un robot industriel, présentant une poignée (21), **caractérisé par** une caméra (24) avec un système optique d'imagerie (25), la caméra (24) étant reliée de manière articulée au moins indirectement avec la poignée (21) de telle sorte que le système optique d'imagerie (25) de la caméra (24) s'oriente automatiquement dans l'espace en direction de la pesanteur indépendamment de la position de la poignée (21), en ce que lors d'une rotation de la poignée (21) autour d'un premier axe (B1) s'étendant en direction de la pesanteur, le système optique (25) de la caméra (24) tourne autour du premier axe (B1) selon la rotation de la poignée (21).

2. Appareil manuel de programmation selon la revendication 1, qui est réalisé de telle sorte que sur la base d'images (70) d'un plan prises avec la caméra (24), perpendiculairement au premier axe (B1), il calcule un premier angle (51) qui est associé à une rotation de la poignée (21) autour du premier axe (B1).

3. Appareil manuel de programmation selon la revendication 1 ou 2, présentant au moins un deuxième axe (B2) et un troisième axe (B3) indépendant du deuxième axe (B2), par rapport auquel la caméra (24) est reliée de manière articulée au moins indirectement avec la poignée (21).

4. Appareil manuel de programmation selon la revendication 3, dans lequel le deuxième axe (B2) est orienté perpendiculairement aux premier et troisième axes (B1, B3).

5. Appareil manuel de programmation selon la revendication 3 ou 4, présentant un premier dispositif de mesure d'angle (30) pour mesurer un deuxième angle (52) du deuxième axe (B2) que la caméra (24) prend par rapport à la poignée (21) lors d'une rotation de la poignée (21) par rapport au deuxième axe (B2), et/ou un deuxième dispositif de mesure d'angle (31) pour mesurer un troisième angle (53) du troisième axe (B3) que la caméra (24) prend par rapport à la poignée (21) lors d'une rotation de la poignée (21) par rapport au troisième axe (33).

6. Appareil manuel de programmation selon l'une des revendications 1 à 5, présentant un émetteur (27) sans fil pour émettre des signaux engendrés par l'appareil manuel de programmation (PHG).

7. Appareil manuel de programmation selon l'une des revendications 1 à 6, présentant des moyens d'entrée (T) pour déplacer un point (7) prédéterminée d'un robot industriel (1) en fonction de l'appareil manuel de programmation (PHG).

8. Dispositif présentant un robot industriel (1) et un appareil manuel de programmation (PHG) selon l'une des revendications 1 à 7 pour programmer le robot industriel (1).

9. Dispositif selon la revendication 8, dont le robot industriel (1) présente un point (7) prédéterminé dont l'orientation dans l'espace est réglable au moins partiellement par un mouvement de la poignée (21) de l'appareil manuel de programmation (PHG) pendant la programmation du robot industriel (1).

10. Dispositif selon la revendication 9, dans lequel la caméra (24) de l'appareil manuel de programmation (PHG) est reliée de manière articulée au moins indirectement avec la poignée (21) de telle sorte que lors d'une rotation de la poignée (21) autour du premier axe (B1) orienté le long de la pesanteur, le système optique (25) de la caméra (24) tourne selon la rotation de la poignée (21) autour du premier axe (B 1), l'appareil manuel de programmation (PHG) présente un deuxième axe (B2) orienté perpendiculairement au premier axe (B1) et un troisième axe (B3) orienté perpendiculairement au deuxième axe (B2), par rapport auquel la caméra (24) est reliée de manière articulée au moins indirectement avec la poignée (21), et l'orientation dans l'espace, du point (2) prédéterminé du robot industriel (1), est réglable sur la base d'une rotation de la poignée (21) par rapport aux premier, deuxième et troisième axes (B1, B2, B3).

11. Dispositif selon l'une des revendications 8 à 10, qui est aménagé de telle sorte que sur la base d'images (70) d'un plan prises avec la caméra (24), perpendiculairement au premier axe (B1), il calcule le premier angle (51) qui est associé à une rotation de la poignée (21) autour du premier axe (B1).

12. Dispositif selon la revendication 11, présentant des marqueurs (10, 10a, 84, 94) qui sont agencés sur le plan orienté perpendiculairement au premier axe (B1) et à l'aide desquels le dispositif calcule le premier angle (51).

13. Dispositif selon l'une des revendications 11 ou 12, dans lequel l'appareil manuel de programmation (PHG) et/ou un ordinateur de commande (8) du robot industriel (1) calcule le premier angle (51).

14. Dispositif selon l'une des revendications 11 à 13, dans lequel le plan présente des marqueurs (10, 10a, 84, 94) dont les illustrations dans les images (70) prises avec la caméra (24) sont utilisées par le dispositif pour le calcul du premier angle (51).

15. Dispositif selon l'une des revendications 11 à 14, qui est aménagé de telle sorte que sur la base des images (20) prises, il calcule la position de l'appareil manuel de programmation (PHG) par rapport au plan et règle la position du point (7) prédéterminé du robot industriel (1) en se basant sur la position calculée.

16. Dispositif selon l'une des revendications 11 à 14, présentant un dispositif de marqueur (80, 90) portable qui présente une plaque (81, 91) orientable perpendiculairement à la pesanteur et pourvue de marqueurs (10, 10a, 84, 94), l'appareil manuel de programmation (PHG) étant réalisé de telle sorte que sur la base d'images (70) prises avec la caméra (24), de la plaque (81, 91) pourvue des marqueurs (10, 10a, 84, 94), il calcule le premier angle (51) lors d'une rotation de la poignée (21) autour du premier axe (B1).

17. Dispositif présentant un appareil manuel de programmation (PHG) selon l'une des revendications 1 à 7 et un dispositif de marqueurs (80, 90) portable, qui présente une plaque (81, 91) orientable perpendiculairement à la pesanteur et pourvue de marqueurs (84, 90) l'appareil manuel de programmation (PHG) étant réalisé de telle sorte que sur la base d'images (80) prises avec la caméra (24), de la plaque (81, 91) pourvue des marqueurs (10, 10a, 84, 94), il calcule le premier angle (51) lors d'une rotation de la poignée (21) autour du premier axe (B1).
